# EUROPEAN PATENT APPLICATION

(11) **EP 4 793 848 A1**
(43) Date of publication of application: **19.08.2026**
(21) Application number: 24877272.5
(22) Date of filing: 11.10.2024
(51) Int. Cl.: G06Q 10/06, G06Q 10/1053

(54) **HIRING MANAGEMENT DEVICE, HIRING MANAGEMENT METHOD, AND PROGRAM**

(30) Priority: 12.10.2023 JP 2023176630
(71) Applicant: Recruit Co., Ltd., Tokyo 100-6640 (JP)
(72) Inventor: KOMUGI, Kiyotaka, Tokyo 100-6640 (JP)
(74) Representative: Piotrowicz, Pawel Jan Andrzej
(86) International application number: PCT/JP2024/036412
(87) International publication number: WO 2025/079678

(57) **Abstract**

A hiring management device includes a request acquisition unit configured to acquire a request for posting a job opening from a hiring company, a job seeker identification information acquisition unit configured to acquire identification information on a job seeker, a salary receipt information acquisition unit configured to acquire information required for the job seeker to receive a salary in response to a request from the hiring company, and a hiring decision capture unit configured to capture a fact that the hiring company has decided to hire the job seeker based on information required for the job seeker to receive a salary and acquired by the salary receipt information acquisition unit and identification information on the job seeker.

## Description

### TECHNICAL FIELD

The present invention relates to a hiring management device, a hiring management method, and a program.

Priority is claimed on Japanese Patent Application No. 2023-176630, filed October 12, 2023, the content of which is incorporated herein by reference.

### BACKGROUND ART

Conventionally, companies seeking to hire personnel post job opening advertisements online to hire job seekers. For example, there is a known service (hereinafter referred to as a job opening information service) that provides advertising space for job opening advertisements free of charge and pays a success fee when hiring is decided (for example, refer to Patent Document 1).

### Citation List

### Patent Document

Patent Document 1: Japanese Unexamined Patent Application, First Publication No. 2020-86799

### SUMMARY OF INVENTION

### Technical Problem

According to the technology described above, a company pays a fee based on a length of employment of successfully hired personnel to a job opening information service. In order for the job opening information service to receive the fee from the company, it needs to first acquire information indicating that the company has decided to hire the personnel. However, it is not easy to acquire the information indicating that the company has decided to hire the personnel, and if this information cannot be obtained, the job opening information service has a problem of not being able to collect the fee, even though it provides advertising space for job opening advertisements free of charge.

The present invention was conceived in light of this situation and aims to provide a hiring management device, a hiring management method, and a program that can easily detect a fact that a company seeking to hire personnel has decided to hire a job seeker.

### Solution to Problem

(1) A hiring management device according to one aspect of the present invention includes a request acquisition unit configured to acquire a request for posting a job opening from a hiring company, a job seeker identification information acquisition unit configured to acquire identification information on a job seeker, a salary receipt information acquisition unit configured to acquire information required for the job seeker to receive a salary in response to a request from the hiring company, and a hiring decision capture unit configured to capture a fact that the hiring company has decided to hire the job seeker based on information required for the job seeker to receive a salary and acquired by the salary receipt information acquisition unit and identification information on the job seeker.
(2) According to one aspect of the present invention, the hiring management device according to the aspect of (1) described above further includes a hiring company first identification information acquisition unit configured to acquire hiring company first identification information, which is identification information used by the hiring company to receive services related to job opening postings, a hiring company second identification information acquisition unit configured to acquire hiring company second identification information, which is identification information used by the hiring company to receive a service related to a salary payment, and an identification information synchronization unit configured to associate the hiring company first identification information and the hiring company second identification information acquired from the same hiring company, in which the hiring decision capture unit may capture the fact that the hiring company has decided to hire the job seeker on the basis of identification information associated by the identification information synchronization unit.
(3) According to one aspect of the present invention, in the hiring management device according to the aspect of (1) described above, the salary receipt information acquisition unit may acquire, from a job seeker, information required for the job seeker to receive a salary, and the hiring decision capture unit may capture the fact that the hiring company has decided to hire the job seeker in response to a salary payment request from the hiring company to the job seeker.
(4) According to one aspect of the present invention, the hiring management device according to any one of the aspects of (1) to (3) described above further includes a salary payment plan information acquisition unit configured to acquire information on whether to make a salary advance payment, in which the salary receipt information acquisition unit may acquire information required for the job seeker to receive a salary in advance.
(5) In addition, a hiring management method according to another aspect of the present invention includes a request acquisition process for acquiring a request for posting a job opening from a hiring company, a job seeker identification information acquisition process for acquiring identification information on a job seeker, a salary receipt information acquisition process for acquiring information required for the job seeker to receive a salary in response to a request from the hiring company, and a hiring decision capture process for capturing that the hiring company has decided to hire the job seeker based on the information required for the job seeker to receive a salary and acquired by the salary receipt information acquisition process and the identification information on the job seeker.
(6) Moreover, a program according to still another aspect of the present invention causes a computer to execute a request acquisition step for acquiring a request for posting a job opening from a hiring company, a job seeker identification information acquisition step for acquiring identification information on a job seeker, a salary receipt information acquisition step for acquiring information required for the job seeker to receive a salary in response to a request from the hiring company, and a hiring decision capture step for capturing that the hiring company has decided to hire the job seeker based on the information required for the job seeker to receive a salary and acquired by the salary receipt information acquisition process and the identification information on the job seeker.

### Advantageous Effects of Invention

According to the present invention, it is possible to provide a hiring management device, a hiring management method, and a program which can easily detect a fact that a company seeking to hire personnel has decided to hire a job seeker.

### BRIEF DESCRIPTION OF DRAWINGS

[FIG. 1] A block diagram showing an example of functional blocks of an entire system according to a first embodiment.
[FIG. 2] A flowchart showing a flow of a series of salary advance payment decision processing performed by the system according to the first embodiment.
[FIG. 3] A flowchart showing a flow of a series of synchronization processing performed by the system according to the first embodiment.
[FIG. 4] A flowchart showing a flow of a series of hiring decision capture processing performed by the system according to the first embodiment.
[FIG. 5] A flowchart showing a flow of a series of salary advance payment processing performed by the system according to the first embodiment.
[FIG. 6] A functional configuration diagram showing an example of a functional configuration of a hiring management device according to the first embodiment.
[FIG. 7] A functional configuration diagram showing an example of a detailed functional configuration of the hiring management device according to the first embodiment.
[FIG. 8] A flowchart showing a flow of a series of job seeker recruitment processing performed by a system according to a second embodiment.
[FIG. 9] A flowchart showing a flow of a series of hiring decision capture processing according to the second embodiment.
[FIG. 10] A flowchart showing a flow of a series of salary advance payment processing according to the second embodiment.
[FIG. 11] A block diagram showing an example of an internal configuration of the hiring management device according to the present embodiment.

### DESCRIPTION OF EMBODIMENTS

### [Embodiment]

In the following description, preferred embodiments of an advance payment device and an advance payment method according to aspects of the present invention are presented and described in detail with reference to the accompanying drawings. However, the aspects of the present invention are not limited to these embodiments and include various modifications and improvements. In other words, components described below include those that a person skilled in the art would easily imagine and those that are substantially identical, and the components described below can be combined as appropriate. In addition, various omissions, substitutions, or modifications of components may be made within a range not departing from the gist of the present invention. Furthermore, in the drawings below, a scale, a number, and the like of each structure may differ from a scale, a number, and the like of an actual structure to make each constituent easier to understand.

### [Overview of system]

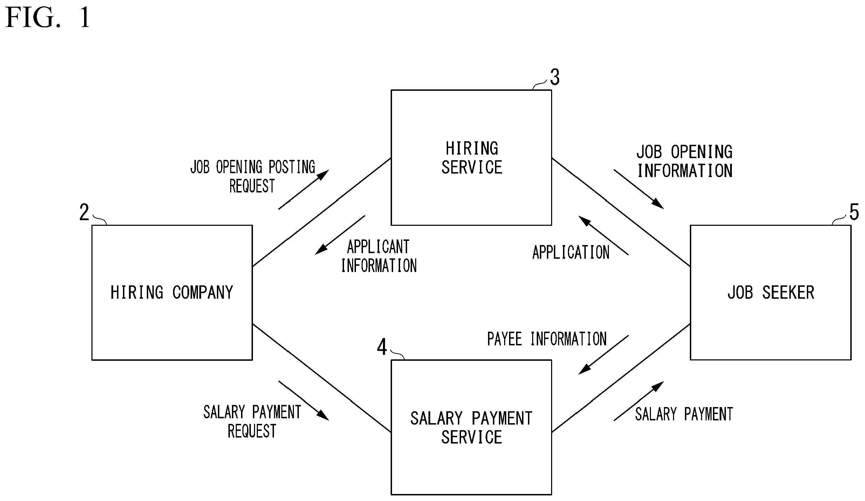

FIG. 1 is a block diagram which shows an example of functional blocks of an entire system according to a first embodiment. First, referring to this diagram, a system 1 according to the present embodiment will be described. The system 1 introduces companies making job openings to job seekers seeking jobs. The system 1 also introduces the job seekers seeking jobs to the companies making job openings. A hiring company that has hired a job seeker makes a salary payment to the job seeker. The system 1 provides a service related to the salary payment. The service related to a salary payment provided by the system 1 may be any services that support the salary payment. For example, the service related to a salary payment provided by the system 1 preferably involve at least one salary payment, such as a salary advance payment, but does not necessarily include continuous salary payments. The system 1 is configured to include at least a plurality of hiring companies 2, a hiring service 3, a salary payment service 4, and a plurality of job seekers 5.

The hiring company 2 is a company seeking to hire personnel. The hiring company 2 may be any seeking to hire personnel and includes a variety of legal entities, such as corporations and non-profit organizations. The hiring company 2 requests the hiring service 3 to post a job opening. A job opening posting request includes a wide range of hiring conditions, such as an employment type, job content, and a desired personnel profile. The hiring service 3 recruits the job seekers 5 in response to the job opening posting request.

The hiring service 3 acquires job opening posting requests from each of the plurality of hiring companies 2 and recruits the job seekers 5 by publishing a plurality of pieces of the acquired job opening information on a hiring medium such as a homepage. The hiring service 3 may also disclose information limited to a job seeker 5 that meets specific conditions. The hiring service 3 selects the job seeker 5 that meets the conditions. The hiring service 3 provides information on the selected job seeker 5 to a corresponding hiring company 2. The hiring service 3 may also provide information on the job seeker 5 registered with the hiring service 3 to the hiring company 2, and the hiring company 2 may select the job seeker 5.

The job seeker 5 is a natural person who uses the hiring service 3. The job seeker 5 applies to the hiring service 3. This application is made on the basis of job opening information obtained from the hiring service 3. In addition, this application may also be made by browsing the internet service provided by the hiring service 3 and identifying a desired job opening.

Here, the job seeker 5 may experience a delay between a decision of being hired by the hiring company 2 and his or her first salary payment after starting work there, and this situation is desired to be improved. Therefore, the system 1 includes the salary payment service 4 as a component to support a salary payment from the hiring company 2 to the job seeker 5. A service provided by the salary payment service 4 is sometimes referred to as an advance payment service, as it may involve a salary advance payment instead of or in addition to a simple salary payment.

The salary payment service 4 receives a request for a salary payment from the hiring company 2. The request for a salary payment may particularly include information on whether to use a salary advance payment service among salary payments. The salary payment service 4 also obtains payee information from the job seeker 5. The payee information may include, for example, information on a bank account to which the payment will be made. Based on the salary payment request received from the hiring company 2 and the payee information obtained from the job seeker 5, the salary payment service 4 supports a salary payment from the hiring company 2 to the job seeker 5.

### [First embodiment]

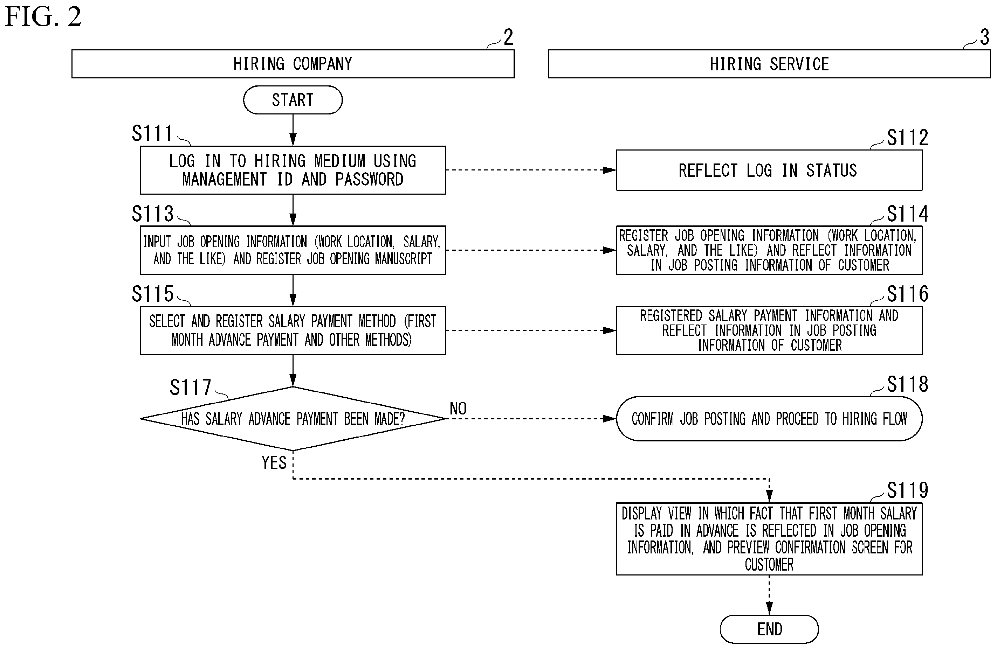

An example of processing according to a first embodiment will be described below with reference to FIGS. 2 to 7. In the first embodiment, capturing a hiring decision of a job seeker 5 by synchronizing information on a hiring company 2 using the hiring service 3 with information on the hiring company 2 using the salary payment service 4 is assumed.

FIG. 2 is a flowchart which shows a flow of a series of salary advance payment decision processing performed by a system according to the first embodiment. First, the salary advance payment decision processing performed by the system 1 will be described with reference to FIG. 2.

First, the hiring company 2 logs in to a service provided by the hiring service 3 using a management ID and a password issued by the hiring service 3 (step S111). The hiring service 3 reflects a login status in the service (step S112). Reflecting the login status may involve, for example, displaying a screen after logging in to the hiring company 2 in a web service.

Next, the hiring company 2 inputs job opening information and registers a job opening manuscript (step S113). The job opening information includes a wide range of hiring and work-related information, such as a work location and a salary. The hiring service 3 reflects the input job opening information in job posting information of a registered customer (step S114). A registered customer is the hiring company 2, and a specific registered customer may be identified from a plurality of hiring companies 2 using predetermined identification information (for example, a management ID).

Next, the hiring company 2 selects and registers a salary payment method (step S115). Salary payment methods may include a first month advance payment and other methods. The first month advance payment is a service that can shorten a period from hiring a job seeker 5 to making a first salary payment. The hiring service 3 reflects the input salary payment information in the job posting information of the registered customer (step S116).

Subsequent processing differs depending on a result of determining whether a salary advance payment has been made (step S117). When a salary advance payment is selected (that is, YES in step S117), processing proceeds to step S119. When a salary advance payment is not selected (that is, NO in step S117), the processing proceeds to step S118.

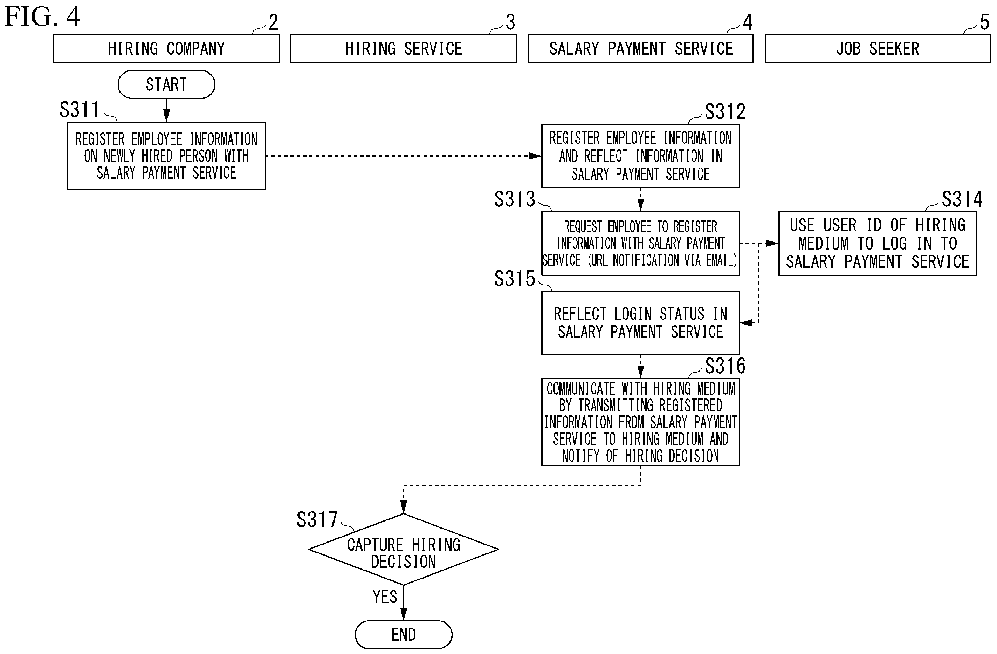

When a salary advance payment is not selected, the hiring service 3 confirms job posting and proceeds to a hiring flow (step S118). Details of the hiring flow will be described below with reference to FIG. 4, and the like.

When a salary advance payment is selected, the hiring service 3 displays a confirmation screen preview in which the first month salary advance payment is reflected in the job opening information. The hiring company 2 confirms the confirmation screen preview and, if the contents are correct, proceeds with the processing (step S119).

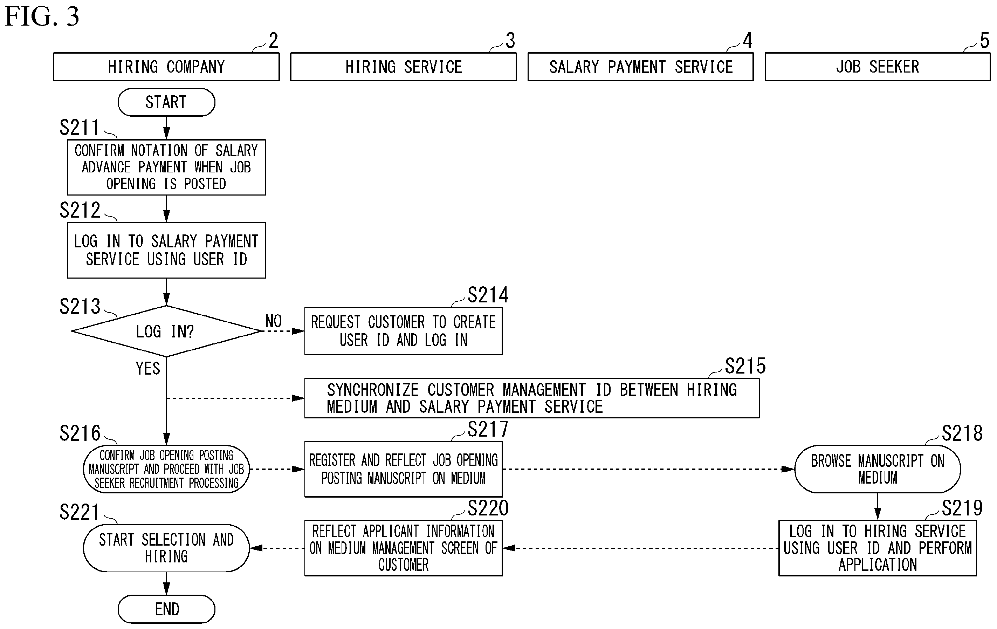

FIG. 3 is a flowchart which shows a flow of a series of synchronization processing performed by the system according to the first embodiment. Next, the synchronization processing performed by the system 1 will be described with reference to FIG. 3. The synchronization processing to be described with reference to FIG. 3 is processing of synchronizing management information of the hiring company 2 in the hiring service 3 with management information of the hiring company 2 in the salary payment service 4. This synchronization processing can also be described as processing for matching the information to determine whether the hiring companies 2 are the same.

First, the hiring company 2 confirms a notation of information on a salary advance payment when a job opening is posted (step S211). Next, the hiring company 2 logs in to the salary payment service 4 using a user ID (step S212). The salary payment service 4 handles a salary advance payment, so that it can also be referred to as a salary advance payment service.

Subsequent processing differs depending on a result of determining whether the hiring company 2 has logged in to the salary payment service 4 (step S213). When the hiring company has logged in to the salary payment service 4 (that is, YES in step S213), the processing proceeds to step S215. When the hiring company has not logged in to the salary payment service 4 (that is, NO in step S213), the processing proceeds to step S214.

When the hiring company 2 has not logged in to the salary payment service 4, the hiring service 3 requests the customerit to create a user ID and log in (step S214).

When the hiring company 2 has logged in to the salary payment service 4, the hiring service 3 and salary payment service 4 synchronize specific identification information for managing the hiring company 2 (for example, this can also be called a management ID for managing a customer) between the hiring service 3 and the salary payment service 4 (step S215).

After the hiring company 2 has logged in to the salary payment service 4, the hiring company 2 confirms a job opening posting manuscript and proceeds with job seeker recruitment processing (step S216). The hiring service 3 registers the confirmed job opening posting manuscript and reflects it on a medium (for example, a website) (step S217). The job seeker 5 browses the manuscripts (job opening information) of a plurality of hiring companies 2 on the medium, selects desired job opening information, and performs an application (step S218). To perform an application, the job seeker 5 needs to log in to the hiring service 3 using a user ID managed by the hiring service 3 (step S219).

When the hiring service 3 receives an application from the job seeker 5, it reflects information on the job seeker 5 that has performed the application on a medium management screen of the hiring company 2 (step S220). The information on the job seeker 5 may be acquired when the job seeker 5 begins using the hiring service 3 or performs an application. The hiring company 2 then selects the job seeker 5 who has performed an application and decides to hire him or her (step S221). Note that a plurality of job seekers 5 may apply for a single job opening made by the hiring company 2.

FIG. 4 is a flowchart which shows a flow of a series of hiring decision capture processing performed by the system according to the first embodiment. Next, the hiring decision capture processing performed by the system 1 will be described with reference to FIG. 4.

First, the hiring company 2 registers employee information on a newly hired person with the salary payment service 4 (step S311). This employee information may have been submitted to the hiring company 2 by a corresponding job seeker 5. Next, the salary payment service 4 reflects the registered employee information (step S312). After the employee information has been reflected, the salary payment service 4 requests the job seeker 5 to register information on a salary payment (step S313). This request may be made, for example, by the salary payment service 4 notifying the job seeker 5 of an email containing a uniform resource locator (URL) of a website for inputting information.

When the job seeker 5 receives the email containing the URL of a website for inputting the information on a salary payment, he or she uses a user ID used to log in to the hiring service 3 to log in to the salary payment service 4 (step S314). Note that a user ID used by the job seeker 5 to log in to the hiring service 3 and a user ID used to log in to the salary payment service 4 may be the same or different. When the job seeker 5 logs in to the salary payment service 4, the salary payment service 4 reflects the login status in the salary payment service 4 (step S315).

The salary payment service 4 communicates with the hiring service 3 by transmitting the information on a salary payment registered by the job seeker 5 (step S316). The registration of information on a salary payment by the job seeker 5 means that the hiring company 2 has decided to hire the job seeker 5. In other words, the transmission of the information in this step can be seen as the salary payment service 4 notifying the hiring service 3 of the hiring decision. Based on the information provided by the salary payment service 4, the hiring service 3 captures a fact that the hiring company 2 has decided to hire the job seeker 5 (step S317).

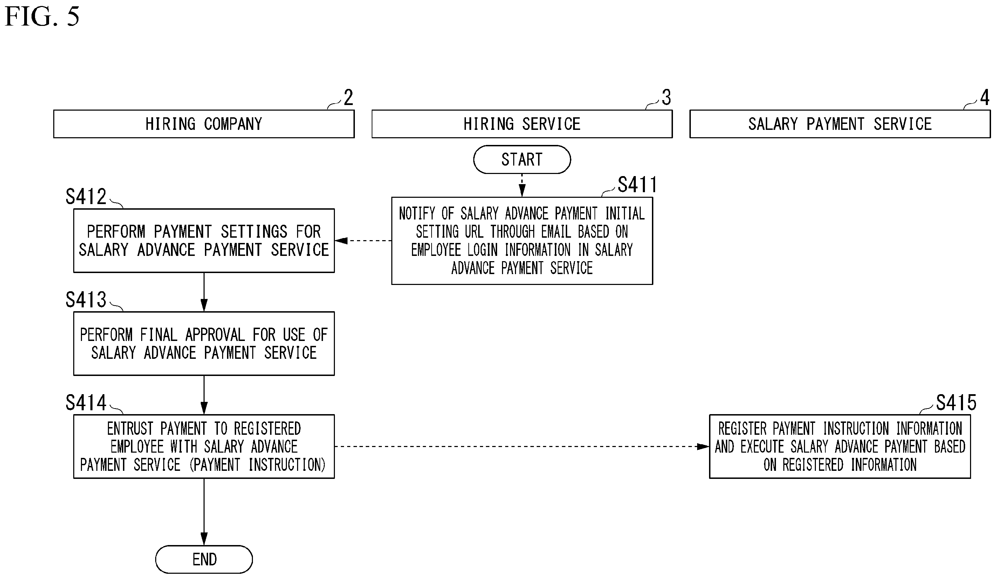

FIG. 5 is a flowchart which shows a flow of a series of salary advance payment processing performed by the system according to the first embodiment. Next, salary advance payment processing performed by the system 1 will be described with reference to FIG. 5. Note that the salary advance payment processing is an example of salary payment processing performed by the salary payment service 4.

First, based on information provided when the job seeker 5 has logged in to the salary payment service 4, the hiring service 3 prompts the hiring company 2 to perform initial settings for a salary advance payment (step S411). For example, the hiring service 3 prompts the hiring company 2 to perform initial settings for a salary advance payment by transmitting an email containing an URL of a website for salary advance payment initial settings. Upon receiving the email from the hiring service 3, the hiring company 2 performs initial settings for a salary advance payment by accessing the URL contained in the email (step S412). Once the initial settings for a salary advance payment are complete, the hiring company 2 performs final approval for a use of the salary advance payment service (step S413). The hiring company 2 entrusts a salary payment to the job seeker 5 (who can also be considered a registered employee at this stage, since the job seeker has already been hired) by transmitting instruction information on the salary payment to the salary payment service 4 (step S414). Upon receiving the information instruction on the salary payment from the hiring company 2, the salary payment service 4 registers the information and executes a salary advance payment to the job seeker 5 based on the registered information (step S415). Note that salary payments from the salary payment service 4 to the job seeker 5 are not limited to advance payments, and continuous payments may also be made.

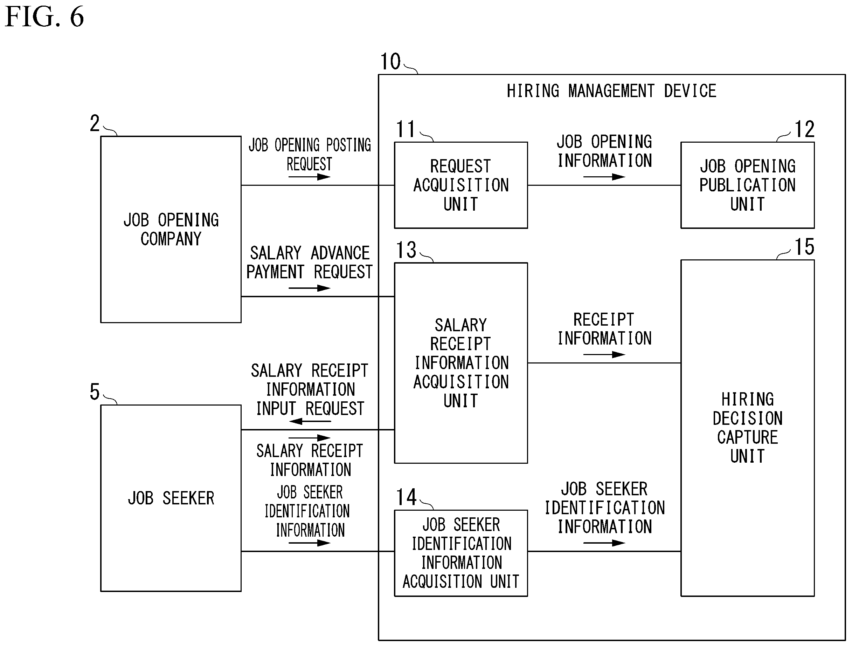

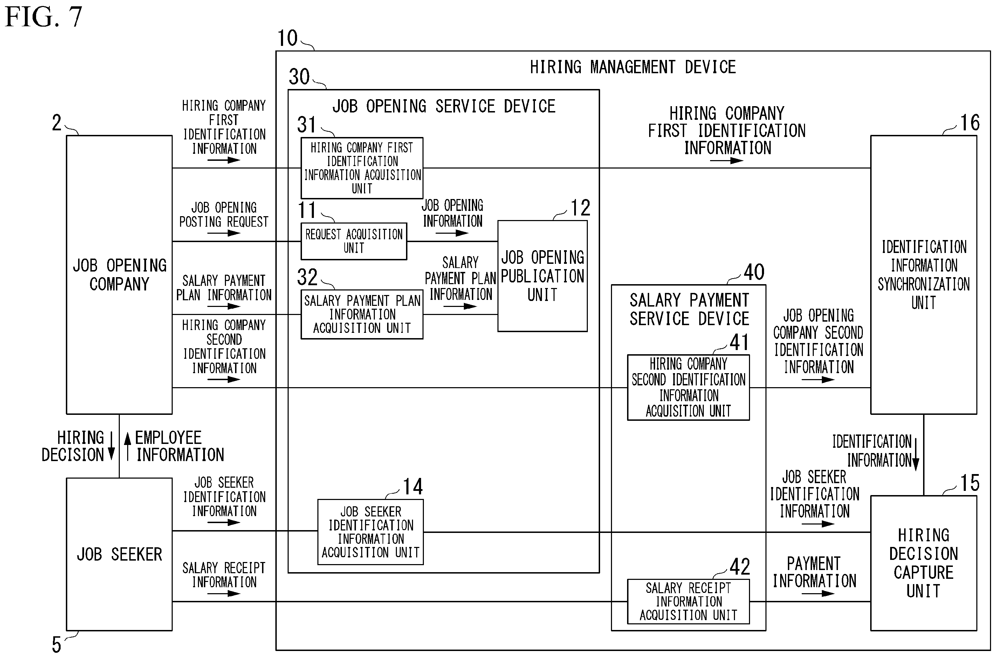

Next, with reference to FIGS. 6 and 7, an example of a specific functional configuration of a device for performing the processing described above will be described.

FIG. 6 is a functional configuration diagram which shows an example of a functional configuration of a hiring management device according to the first embodiment. With reference to FIG. 6, an example of a functional configuration of the hiring management device 10 will be described. The hiring management device 10 may be provided in any one of the hiring service 3 and the salary payment service 4, or functions of the hiring management device 10 may be distributed and disposed between the hiring service 3 and the salary payment service 4. The hiring management device 10 includes a request acquisition unit 11, a job opening publication unit 12, a salary receipt information acquisition unit 13, a job seeker identification information acquisition unit 14, and a hiring decision capture unit 15. Each of these functional units is realized, for example, using electronic circuits. Each functional unit may also include storage means such as a semiconductor memory or a magnetic hard disk drive therein, as necessary. Each function may also be realized by a computer with a central processing unit (CPU) and software. In addition, all or part of each functional unit may be realized using hardware such as an application specific integrated circuit (ASIC), a programmable logic device (PLD), or a field-programmable gate array (FPGA). In addition, all or part of each functional unit may be realized by software and hardware in cooperation.

The request acquisition unit 11 acquires a request for posting a job opening from the hiring company 2. The request for posting a job opening may be, for example, those made in step S113 described above. The request for posting a job opening may include hiring conditions such as a work location and a salary, and a wide range of work-related job opening information.

The job opening publication unit 12 performs posting on a hiring medium based on the request for posting a job opening acquired by the request acquisition unit 11. Specifically, posting on a hiring medium may include posting on a website operated by the hiring service 3.

The salary receipt information acquisition unit 13 acquires a request regarding whether to make a salary advance payment from the hiring company 2. This request may be related to a salary payment and is not limited to an advance payment. When the salary receipt information acquisition unit 13 receives a request to make a salary advance payment, it requests the job seeker 5 to input salary receipt information. This request may be made, for example, by transmitting an email containing an URL of a salary receipt information input form to the job seeker 5. Upon receiving the email containing the URL of the salary receipt information input form, the job seeker 5 accesses a link of the URL and inputs the salary receipt information. The salary receipt information acquisition unit 13 acquires information input by the job seeker 5. In other words, the salary receipt information acquisition unit 13 can acquire information required for the job seeker 5 to receive a salary in response to a request from the hiring company 2. The salary receipt information acquisition unit 13 provides the acquired salary receipt information to the hiring decision capture unit 15.

The job seeker identification information acquisition unit 14 acquires job seeker identification information from the job seeker 5. The job seeker identification information is a management ID used to identify the job seeker 5 and is a number assigned to each job seeker 5. The job seeker identification information acquisition unit 14 provides the acquired job seeker identification information to the hiring decision capture unit 15.

The hiring decision capture unit 15 captures a fact that the hiring company 2 has decided to hire the job seeker 5 based on the information required for the job seeker 5 to receive a salary and job seeker identification information identifying the job seeker 5, both of which are acquired by the salary receipt information acquisition unit 13. The hiring decision capture unit 15 can capture the fact that the hiring company 2 has decided to hire the job seeker 5 based on a salary payment request from the hiring company 2 to the job seeker 5.

FIG. 7 is a functional configuration diagram which shows an example of a detailed functional configuration of the hiring management device according to the first embodiment. An example of the functional configuration of the hiring management device 10 will be described in more detail with reference to FIG. 7. Description in FIG. 7 describes an example in which, as functional units constituting the hiring management device 10, a job opening service device 30 that is a device used in the hiring service 3 and a salary payment service device 40 that is a device used in the salary payment service 4 have respective functions. However, allocation of devices to which each functional unit is equipped is not limited to this example. Note that in the description given with reference to FIG. 7, components already described with reference to FIG. 6 will be assigned the same reference numerals as in FIG. 6, and descriptions thereof will be omitted in some cases.

The hiring management device 10 includes the job opening service device 30, the salary payment service device 40, the hiring decision capture unit 15, and an identification information synchronization unit 16. By incorporating these functional units, the hiring management device 10 performs the processing described with reference to FIGS. 2 to 5. The hiring decision capture unit 15 and the identification information synchronization unit 16 may be provided in a device different from the job opening service device 30 or the salary payment service device 40, or may be provided in any one of the job opening service device 30 and the salary payment service device 40.

The job opening service device 30 is used in the hiring service 3 and provides job opening services to the hiring company 2 and the job seeker 5. Specific functional constituents of the job opening service device 30 include a hiring company first identification information acquisition unit 31, the request acquisition unit 11, the job opening publication unit 12, a salary payment plan information acquisition unit 32, and the job seeker identification information acquisition unit 14.

The hiring company first identification information acquisition unit 31 acquires hiring company first identification information from the hiring company 2. The hiring company first identification information is identification information used by the hiring company 2 to receive services related to the job opening postings. The hiring company first identification information can also be considered a user ID used by hiring company 2 to log in to the hiring service 3 (or a management ID used by the hiring service 3 to identify the hiring company 2). The hiring company first identification information acquisition unit 31 provides the acquired hiring company first identification information to the identification information synchronization unit 16.

The salary payment plan information acquisition unit 32 acquires information on whether to make a salary advance payment from the hiring company 2. The job opening publication unit 12 posts job opening information further on the basis of the information on whether to make a salary advance payment acquired by the salary payment plan information acquisition unit 32.

The salary payment service device 40 is used in the salary payment service 4 to provide salary payment services to the hiring company 2 and the job seeker 5. The salary payment service device 40 includes a hiring company second identification information acquisition unit 41 and a salary receipt information acquisition unit 42.

The hiring company second identification information acquisition unit 41 acquires hiring company second identification information from the hiring company 2. The hiring company second identification information is identification information used by the hiring company 2 to receive services related to salary payments. The hiring company second identification information can also be considered a management ID used by the hiring company 2 to log in to the salary payment service 4 (or a management ID used by the salary payment service 4 to identify the hiring company 2). The hiring company second identification information acquisition unit 41 provides the acquired hiring company second identification information to the identification information synchronization unit 16.

The salary receipt information acquisition unit 42 acquires information required for the job seeker 5 to receive a salary from the job seeker 5. The salary receipt information acquisition unit 42 acquires the information required for the job seeker 5 to receive a salary (preferably, salary advance payment). The salary receipt information acquisition unit 13 shown in FIG. 6 can also be considered an example of a constituent equipped with the salary payment plan information acquisition unit 32 and the salary receipt information acquisition unit 42. Functions of the salary payment plan information acquisition unit 32 and the salary receipt information acquisition unit 42 can also be considered part of the functions of the salary receipt information acquisition unit 13.

The identification information synchronization unit 16 acquires hiring company first identification information from the hiring company first identification information acquisition unit 31 and acquires the hiring company second identification information from the hiring company second identification information acquisition unit 41. The identification information synchronization unit 16 compares the acquired information and determines whether it is for the same hiring company 2. For example, the identification information synchronization unit 16 synchronizes the identification information by associating the identification information for the same hiring company 2.

The hiring decision capture unit 15 captures the fact that the hiring company 2 has decided to hire the job seeker 5 on the basis of the identification information associated by the identification information synchronization unit 16. More specifically, the hiring decision capture unit 15 captures the fact that the hiring company 2 has decided to hire the job seeker 5 in response to a salary payment request from the hiring company 2 to the job seeker 5. At this time, because synchronization is performed by the identification information synchronization unit 16, the hiring decision capture unit 15 can easily consider a company using the hiring service 3 and a company using the salary payment service 4 to be the same company, making it possible to easily capture the hiring decision.

### [Second embodiment]

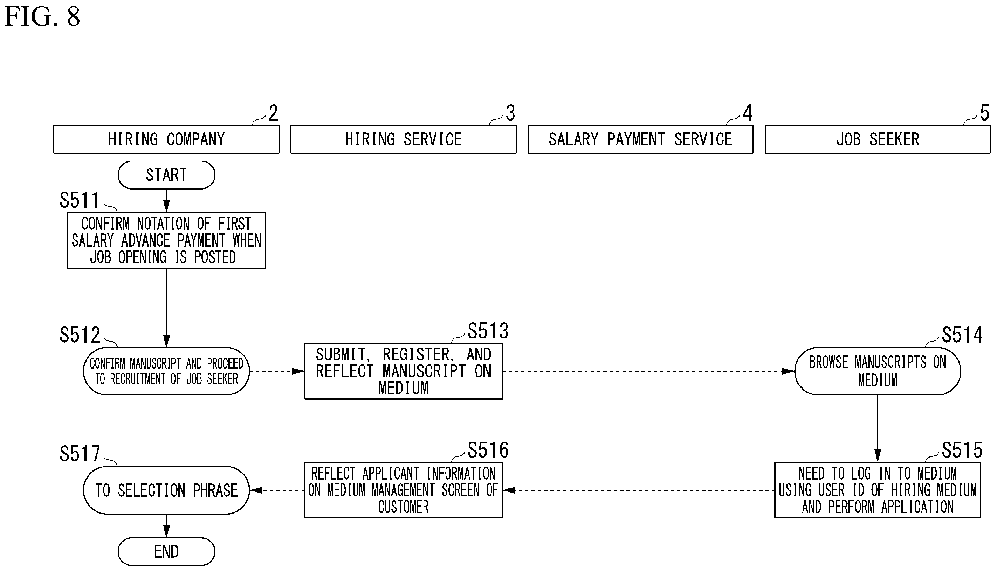

An example of processing according to a second embodiment will be described below with reference to FIGS. 8 to 10. In the first embodiment, it is assumed that the hiring decision is captured by the hiring service 3 without synchronizing the hiring service 3 with the salary payment service 4. Salary advance payment decision processing described with reference to FIG. 2 in the second embodiment is similar to that described with reference to the first embodiment, and therefore description thereof will be omitted.

FIG. 8 is a flowchart which shows a flow of a series of job seeker recruitment processing performed by the system according to the second embodiment. First, the job seeker recruitment processing performed by the system 1 will be described with reference to FIG. 2.

First, the hiring company 2 confirms the notation of the information on a salary advance payment when a job opening is posted (step S511). Next, the hiring company 2 confirms a manuscript posted to the hiring service 3 and proceeds to recruitment of the job seeker 5 (step S512). Next, the hiring service 3 registers the confirmed manuscript for posting a job opening and reflects it on a medium (for example, a website) (step S513). The job seeker 5 browses manuscripts (job opening information) of a plurality of hiring companies 2 on the medium, selects desired job opening information, and performs an application (step S514). Here, to perform an application, the job seeker 5 needs to log in to the hiring service 3 using a user ID managed by the hiring service 3 (step S515). When an application is received from the job seeker 5, the hiring service 3 reflects information on the job seeker 5 who has performed the application on a medium management screen of the hiring company 2 (step S516). The information on the job seeker 5 may be acquired when the job seeker 5 starts using the hiring service 3 or may also be acquired during the application. The hiring company 2 screens the job seeker 5 that has applied and decides whether to hire the job seeker 5. Note that there may be cases where a plurality of job seekers 5 apply for one job opening made by the hiring company 2 (step S517).

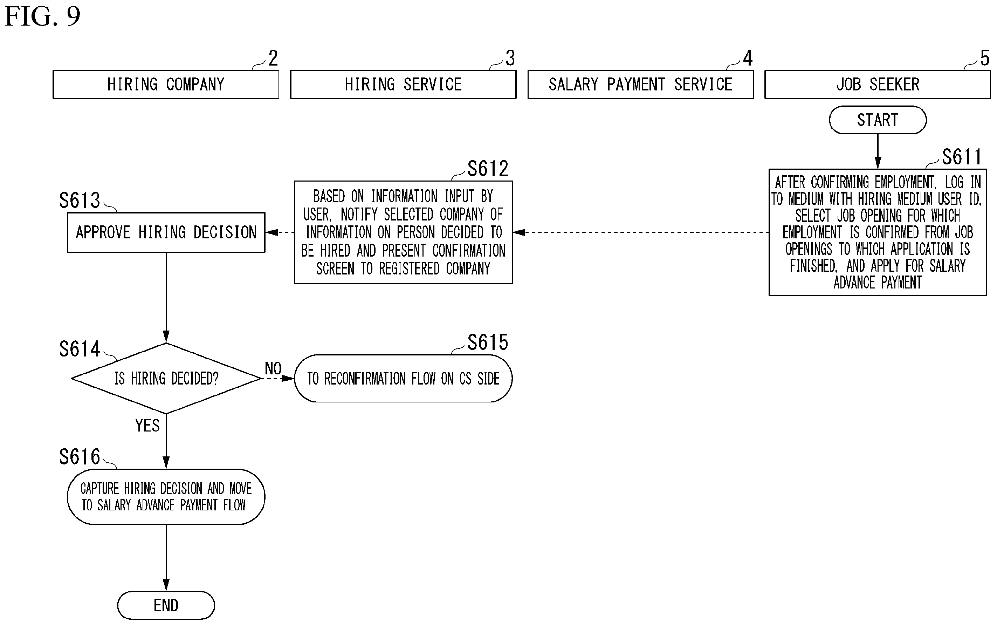

FIG. 9 is a flowchart which shows a flow of a series of hiring decision capture processing according to the second embodiment. Next, the hiring decision capture processing performed by the system 1 in the second embodiment will be described with reference to FIG. 9.

First, after the job seeker 5 has confirmed employment with a specific hiring company 2, the job seeker 5 logs in to the hiring service 3 using a login ID for the hiring service 3. The job seeker 5 selects a job opening for which employment has been confirmed from job openings to which the job seeker 5 has applied and applies for a salary advance payment (step S611). Note that the job seeker 5 may also input information such as a salary transfer account when applying for a salary advance payment. Based on the input information on the job seeker 5, the hiring service 3 registers information on a person decided to be hired to the hiring company 2. The hiring service 3 then presents a confirmation screen to the registered hiring company 2 (step S612). The confirmation screen may also be presented by other methods, such as email notification.

When the hiring service 3 presents the confirmation screen to the hiring company 2, the hiring company 2 confirms that it has hired the job seeker 5. That is, the hiring company 2 approves the hiring decision (step S613). When the hiring company 2 has approved the hiring decision (that is, YES in step S614), the processing proceeds to step S616. When the hiring company 2 does not approve the hiring decision (that is, NO in step S614), the processing proceeds to step S615.

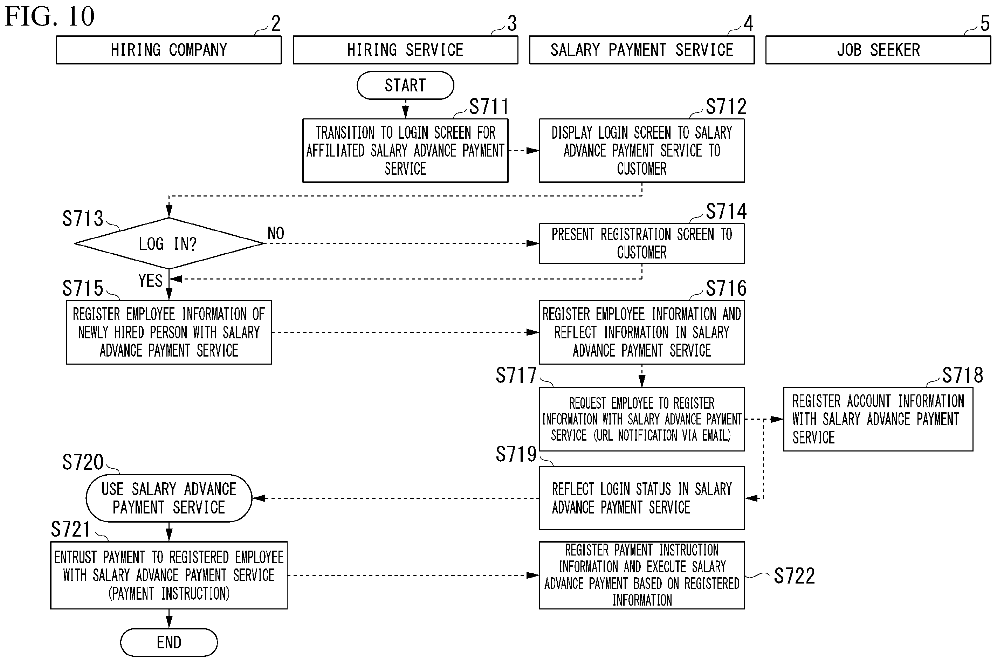

When the hiring company 2 does not approve the hiring decision, it is likely that the job seeker 5 has made an error in operation. Therefore, the hiring service 3 performs reconfirmation processing on the job seeker 5 (step S615). In addition, when the hiring company 2 has approved the hiring decision, the system 1 captures the hiring decision. After the hiring decision is captured, the hiring company 2 proceeds to salary advance payment processing, which will be described with reference to FIG. 10.

FIG. 10 is a flowchart which shows a flow of a series of salary advance payment processing according to the second embodiment. Next, salary advance payment processing performed by the system 1 will be described with reference to FIG. 10. Note that salary advance payment processing is an example of the salary payment processing performed by the salary payment service 4.

Once the hiring decision is captured, the hiring service 3 transitions to a login screen for its affiliated salary payment service 4 (step S711). The salary payment service 4 presents a login screen to the salary payment service 4 to the hiring company 2 (step S712). The hiring company 2 logs in according to the presented login screen (step S713). The hiring company 2 may not have information required to log in to the salary payment service 4 (may not be registered with the salary payment service 4).
Therefore, when the hiring company 2 does not have the information required to log in to the salary payment service 4 (that is, NO in step S713), the processing proceeds to step S714 to perform a registration with the salary payment service 4. In step S714, the hiring company 2 performs a registration with the salary payment service 4. When the hiring company 2 performs a registration with the salary payment service 4 in step S714, or when the hiring company 2 already has the information required to log in to the salary payment service 4 (that is, YES in step S713), the processing proceeds to step S715.

The hiring company 2 registers employee information of a newly hired person with the salary payment service 4 (step S715). This employee information may have been submitted to the hiring company 2 by a corresponding job seeker 5. Next, the salary payment service 4 reflects the registered employee information (step S716).
After the employee information is reflected, the salary payment service 4 requests the job seeker 5 to register information on a salary payment (step S717). This request may be made, for example, by the salary payment service 4 notifying the job seeker 5 of an email containing the URL of a website for inputting information.

When the job seeker 5 receives the email containing the URL of a website for inputting information on a salary payment, he or she uses the user ID used to log in to the hiring service 3 to log in to the salary payment service 4 and registers account information with the salary payment service 4 (step S718). When the job seeker 5 logs in, the salary payment service 4 reflects the login status (step S719).

When the hiring company 2 uses the salary payment service 4 (step S720), the hiring company 2 entrusts a salary payment to the job seeker 5 (who can also be considered a registered employee because the job seeker has already been hired at this stage) by transmitting instruction information on a salary payment to the salary payment service 4 (step S721). Upon receiving the instruction information on a salary payment from the hiring company 2, the salary payment service 4 performs a registration based on the information and executes a salary advance payment to the job seeker 5 based on the registered information (step S722). Note that salary payments from the salary payment service 4 to the job seeker 5 are not limited to advance payments, and continuous payments may also be made.

### [Internal configuration]

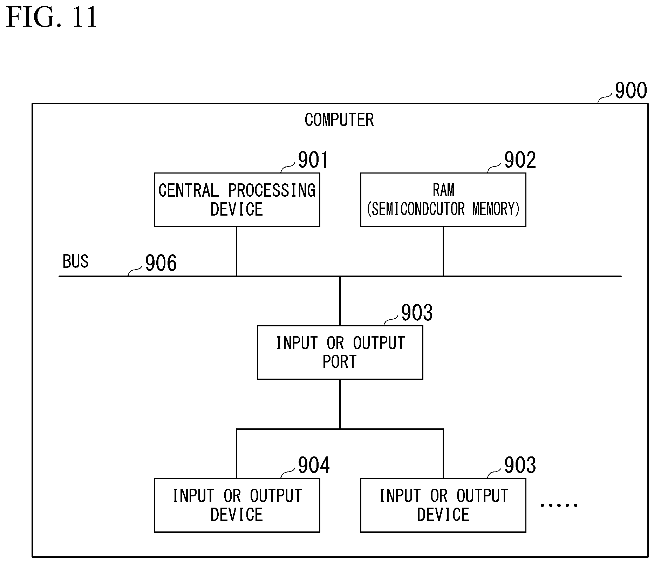

FIG. 11 is a block diagram which shows an example of an internal configuration of the hiring management device 10 according to the present embodiment. At least some of the functions of the hiring management device 10 can be implemented using a computer. As shown, the computer includes a central processing unit 901, RAM 902, an input or output port 903, input or output devices 904 and 905, and a bus 906. The computer itself can be implemented using existing technology. The central processing unit 901 executes instructions contained in a program read from the RAM 902 or the like. In accordance with each instruction, the central processing unit 901 writes data to the RAM 902, reads data from the RAM 902, and performs arithmetic and logical operations. The RAM 902 stores data and programs. Each element contained in the RAM 902 has an address and can be accessed using the address. Note that RAM is an abbreviation for "random access memory." The input or output port 903 is a port through which the central processing unit 901 exchanges data with external input or output devices. The input or output devices 904 and 905 are input or output devices. The input or output devices 904 and 905 exchange data with the central processing unit 901 via the input or output port 903. The bus 906 is a common communication path used within the computer. For example, the central processing unit 901 reads and writes data from and to the RAM 902 via the bus 906. Also, for example, the central processing unit 901 accesses the input or output port via the bus 906. Furthermore, all or part of the functional units provided in the hiring management device 10 may be implemented using hardware such as an ASIC, PLD, or FPGA. Furthermore, all or part of the functional units may be implemented by software and hardware in cooperation.

### [Summary of Embodiment]

As described above, the hiring management device 10 includes a request acquisition unit 11 to acquire a request for posting a job opening from the hiring company 2, a job seeker identification information acquisition unit 14 to acquire identification information of the job seeker 5, a salary receipt information acquisition unit 13 to acquire information required for the job seeker 5 to receive a salary in response to a request from the hiring company 2, and a hiring decision capture unit 15 to capture the fact that the hiring company 2 has decided to hire the job seeker 5 based on the information required for the job seeker 5 to receive a salary acquired by the salary receipt information acquisition unit 13 and the identification information of the job seeker 5. According to the present embodiment, the hiring management device 10, with such a configuration, can easily capture the fact that the hiring company 2 seeking to hire personnel has decided to hire the job seeker 5. This allows the hiring company 2 to reliably bill the hiring company 2 for a fee according to the hiring decision.

In addition, according to the embodiment described above, the hiring management device 10 includes the hiring company first identification information acquisition unit 31 to acquire hiring company first identification information, which is identification information used by the hiring company 2 to receive services related to job opening postings, the hiring company second identification information acquisition unit 41 to acquire hiring company second identification information, which is identification information used by the hiring company 2 to receive services related to salary payments, and the identification information synchronization unit 16 to associate the hiring company first identification information and hiring company second identification information acquired from the same hiring company 2. Moreover, the hiring decision capture unit 15 captures a fact that the hiring company 2 has decided to hire the job seeker 5 on the basis of the identification information associated by the identification information synchronization unit 16. According to the present embodiment, with such a configuration, the hiring company 2 seeking to hire personnel can easily capture the fact that it has decided to hire the job seeker 5. This allows the hiring company 2 to reliably bill the hiring company 2 for the fee according to the hiring decision.

Furthermore, according to the embodiment described above, the salary receipt information acquisition unit 13 provided in the hiring management device 10 acquires the information required for the job seeker 5 to receive a salary from the job seeker 5, and the hiring decision capture unit 15 captures the fact that the hiring company 2 has decided to hire the job seeker 5 in response to a salary payment request from the hiring company 2 to the job seeker 5. According to the present embodiment, with such a configuration, the hiring company 2 seeking to hire personnel can easily detect the fact that it has decided to hire the job seeker 5. Therefore, the hiring company 2 can reliably bill the hiring company 2 for the fee according to the hiring decision.

Furthermore, according to the embodiment described above, the hiring management device 10 includes the salary payment plan information acquisition unit 32 to acquire information on whether to make a salary advance payment, and the salary receipt information acquisition unit 42 acquires information required for the job seeker 5 to receive a salary advance payment. That is, according to the present embodiment, it is possible to make a salary advance payment from the hiring company 2 to the job seeker 5. Therefore, according to the present embodiment, a period from when the job seeker 5 starts working to when he or she receives the first paycheck can be shortened. Furthermore, according to the present embodiment, by actively providing services that are attractive to the job seeker 5, the hiring company 2 can increase its job opening ratio, and further, it becomes easier to capture the fact that the hiring company 2 has hired the job seeker 5.

In addition, all or part of functions of each unit of the hiring management device 10 in the embodiment described above may be implemented by recording a program for implementing these functions on a computer-readable recording medium, and reading and executing the program recorded on the recording medium into a computer system. Note that a term "computer system" here includes the OS and hardware such as peripheral devices.

Moreover, "computer-readable recording medium" refers to a portable medium such as a flexible disk, an optical magnetic disk, an ROM, or a CD-ROM, as well as a storage unit such as a hard disk embedded into the computer system. Furthermore, the "computer-readable recording medium" may also include a medium that dynamically stores a program for a short period of time, such as a communication line used when a program is transmitted over networks like the Internet or over communication lines like a telephone line, or a medium that holds a program for a fixed period of time, such as a volatile memory within the computer system that serves as a server or client in such a case. Moreover, the program described above may be designed to implement part of the functions described above, or may be capable of implementing the functions described above in combination with a program already recorded in the computer system.

The above describes an embodiment of the present invention, but the present invention is not limited to the embodiments described above, and various modifications can be made within a range not departing from the gist of the present invention.

### INDUSTRIAL APPLICABILITY

This invention makes it easy to detect a fact that a company seeking to hire personnel has decided to hire a job seeker.

### REFERENCE SIGNS LIST

1 System
2 Hiring company
3 Hiring service
4 Salary payment service
5 Job seeker
10 Hiring management device
11 Request acquisition unit
12 Job opening publication unit
13 Salary receipt information acquisition unit
14 Job seeker identification information acquisition unit
15 Hiring decision capture unit
16 Identification information synchronization unit
30 Job opening service device
31 Hiring company first identification information acquisition unit
32 Salary payment plan information acquisition unit
40 Salary payment service device
41 Hiring company second identification information acquisition unit
42 Salary receipt information acquisition unit

## Claims

1. A hiring management device comprising:
a request acquisition unit configured to acquire a request for posting a job opening from a hiring company;
a job seeker identification information acquisition unit configured to acquire identification information on a job seeker;
a salary receipt information acquisition unit configured to acquire information required for the job seeker to receive a salary in response to a request from the hiring company; and
a hiring decision capture unit configured to capture a fact that the hiring company has decided to hire the job seeker based on information required for the job seeker to receive a salary and acquired by the salary receipt information acquisition unit and identification information on the job seeker.

2. The hiring management device according to claim 1, further comprising:
a hiring company first identification information acquisition unit configured to acquire hiring company first identification information, which is identification information used by the hiring company to receive services related to job opening postings;
a hiring company second identification information acquisition unit configured to acquire hiring company second identification information, which is identification information used by the hiring company to receive a service related to a salary payment; and
an identification information synchronization unit configured to associate the hiring company first identification information and the hiring company second identification information acquired from the same hiring company,
wherein the hiring decision capture unit captures the fact that the hiring company has decided to hire the job seeker on the basis of identification information associated by the identification information synchronization unit.

3. The hiring management device according to claim 1,
wherein the salary receipt information acquisition unit acquires, from a job seeker, information required for the job seeker to receive a salary, and
the hiring decision capture unit captures the fact that the hiring company has decided to hire the job seeker in response to a salary payment request from the hiring company to the job seeker.

4. The hiring management device according to any one of claims 1 to 3, further comprising:
a salary payment plan information acquisition unit configured to acquire information on whether to make a salary advance payment, and
the salary receipt information acquisition unit acquires information required for the job seeker to receive a salary in advance.

5. A hiring management method comprising:
a request acquisition process for acquiring a request for posting a job opening from a hiring company;
a job seeker identification information acquisition process for acquiring identification information on a job seeker;
a salary receipt information acquisition process for acquiring information required for the job seeker to receive a salary in response to a request from the hiring company; and
a hiring decision capture process for capturing that the hiring company has decided to hire the job seeker based on the information required for the job seeker to receive a salary and acquired by the salary receipt information acquisition process and the identification information on the job seeker.

6. A program causing a computer to execute:
a request acquisition step for acquiring a request for posting a job opening from a hiring company;
a job seeker identification information acquisition step for acquiring identification information on a job seeker;
a salary receipt information acquisition step for acquiring information required for the job seeker to receive a salary in response to a request from the hiring company; and
a hiring decision capture step for capturing that the hiring company has decided to hire the job seeker based on the information required for the job seeker to receive a salary and acquired by the salary receipt information acquisition process and the identification information on the job seeker.
